# EUROPEAN PATENT APPLICATION

(11) **EP 4 245 593 A1**
(43) Date of publication of application: **20.09.2023**
(21) Application number: 23161796.0
(22) Date of filing: 14.03.2023
(51) Int. Cl.: B60L 5/24, B60L 53/14, B60L 53/16

(54) **MODULAR CONTACT RAIL, CHARGING DEVICE, VEHICLE DEPOT, AND TRANSPORTATION SYSTEM**

(30) Priority: 16.03.2022 DE 102022106111
(71) Applicant: Kummler + Matter AG, 8108 Dällikon (CH)
(72) Inventor: Flubacher, Martin, 5303 Würenlingen (CH); Berger, Stefan, 8450 Andelfingen (CH); Darra, Dennis, 5452 Oberrohrdorf (CH)
(74) Representative: Jacobacci Coralis Harle

(57) **Abstract**

The invention relates to a modular contact rail (50) for a movable contacting element (65) of a battery-operated and/or battery-assisted vehicle (61, 62, 63), with several vehicles (61, 62, 63) being able to be parked on a single-lane parking area (101 through 104) extending along a longitudinal axis (L).

## Description

The invention relates to a modular contact rail for forming an electrical connection for movable contacting elements of battery-operated and/or battery-assisted vehicles according to claim 1. The present invention also includes a charging device for providing charging power for battery-operated and/or battery-assisted vehicles according to claim 9, a vehicle depot for battery-operated and/or battery-assisted vehicles with at least one single-lane parking area extending along a longitudinal direction according to claim 13, and a transportation system according to claim 15.

Due to reduced local emission, battery-powered and/or battery-assisted vehicles are increasingly being used in the transportation sector, which is why the need for a powerful charging infrastructure is also increasing. In addition to charging the vehicle battery with constant direct or alternating current via charge controllers on the vehicle, stationary charge controllers are also known which generate a regulated charging voltage or a regulated charging current on the output side. In addition to higher charging capacities, stationary charge controllers also have the advantage that the charge controller in the vehicle can be omitted, which in addition to saving weight also leads to additional storage space in the vehicle.

In order to carry out a charging process, the vehicles must first be connected to the stationary charge controller via a charging cable, a pantograph or another connection system, for which there are already various manual and automated concepts.

When using charging cables, they must not exceed a total length of 10 m for trouble-free operation in accordance with ISO 15118-3, which is why the vehicles must be parked in defined areas of ± 3 m. With automatic contacting systems such as pantographs, the tolerance is typically ± 0.5 m.

For simplified handling of charging cables for vehicles in fleet operation, spring balancers, motorized cable reels and other cable routing systems are also known, with the charging cables for the electrical connection of all vehicles being suspended above or next to the vehicles.

Traditional vehicle depots for large vehicle fleets usually consist of long parking lanes in which the vehicles, which can have different vehicle lengths, enter one after the other and are parked in rows. Here, the order can vary depending on a timetable.

In order to still charge the vehicles during regular parking times in the vehicle depots, either a fixed parking sequence or separate parking lanes for vehicles of different lengths are required when considering the maximum permissible charging cable length.

Especially for multi-vehicle fleets, which may vary in length, this can lead to increased space requirements or reduce the operational flexibility of the vehicle depot, thereby increasing the overall operational costs, making the transition from internal combustion engine vehicles to battery-powered vehicles more difficult.

The present invention is therefore based on the object of addressing and at least partially eliminating the disadvantages known from the prior art. In particular, the object of the present invention is to provide an improved contact rail and an optimized charging device for providing charging power for battery-operated and/or battery-assisted vehicles, which in particular enables vehicles of different vehicle lengths to be charged with charging powers that can be regulated separately. Furthermore, it is the object of the present invention to specify an optimized vehicle depot and an improved transportation system.

The object is achieved by a device and a system according to the features of the independent claims.

Advantageous embodiments of the invention are described in the dependent claims. The present invention also addresses other problems or provides the solution to other objects, as will become apparent from the following description. All combinations of at least two of the features disclosed in the description, the claims and/or the figures fall within the scope of the invention.

According to the scope of the present invention it is envisaged to provide a modular contact rail for forming an electrical connection for movable contacting elements of battery-operated and/or battery-assisted vehicles that can be parked on a single-lane parking area of a vehicle depot that extends along a longitudinal axis.

The modular contact rail according to the invention comprises a first contact rail element, which comprises a base body and is elongate and can therefore be aligned along the longitudinal axis and/or a parking area, having a first pair of charging conductors, which is formed in a freely accessible area along the contact rail element, in particular along the longitudinal extension of the contact rail element, in such a way that a movable contacting element of a vehicle that is parked within a first section of the parking area can be connected to the pair of charging conductors, in particular to a first charging conductor and a second charging conductor of the first pair of charging conductors, in order to tap off a first charging power.

Furthermore, the contact rail according to the invention comprises at least one second contact rail element, which is designed in accordance with the first contact rail element but additionally comprises a controllable switching element.

Thus, the at least one second contact rail element also comprises a pair of charging conductors, which extends along the longitudinal extent of the at least one second contact rail element in a freely accessible area of the at least one second contact rail element and/or is formed there in such a way that this pair of charging conductors can also be contacted electrically by a movable contacting element of a vehicle, which is parked within a second section on the parking area, in order to tap off a second charging power.

According to the invention, the controllable switching element is formed such that, in the closed switching state, two contacts of the controllable switching element can be connected to one another in an electrically conductive manner, and that, in an open switching state, the two contacts are separated from one another, in particular electrically insulated.

Furthermore, the switching element is connected between the first and the second contact rail element in such a way that when the switching element is in a closed switching state, the first pair of charging conductors can be electrically connected to the second pair of charging conductors via the switching element in order to tap off the first and the second charging power via a contacting element on the first or second pair of charging conductors.

Furthermore, the contact rail according to the invention comprises control means for driving the controllable switching element. Furthermore, the control means are preferably designed for communicating and/or adjusting and/or transmitting a charging power and/or a charging power target value and/or measured values, in particular measured voltage and/or current values and/or configuration data, in particular of the first charging power and of the at least one second charging power.

The control means can preferably exchange information with at least one charge controller and/or with a vehicle parked on the parking area, in particular a first vehicle and/or a second vehicle, and/or with a battery management system.

When the contact rail is in an operational and/or installed state, a battery-operated and/or battery-supported vehicle can tap off a regulated voltage or a regulated current on the pair of charging conductors via a movable contacting element. Since the pair of charging conductors is designed to be freely accessible with respect to the longitudinal extension of the contact rail element, the electrical contacting of the contacting element can take place at different positions within the parking area. The pair of charging conductors thus forms a contact area for the contacting element, which extends along the longitudinal axis. The electrical contacting can thus advantageously take place independently of a predetermined longitudinal position of the vehicle on the parking area.

In addition, charging sectors can also be formed from more than one contact rail element.

This leads to an additional extension of the contact area within which charging power can be tapped off by means of the contacting element.

According to the invention, the controllable switching element is designed such that, in the closed switching state, the first charging power and the second charging power, which can be produced especially by means of a first charge controller and at least a second charge controller, can be tapped off by the movable contacting element of a vehicle on the first pair of charging conductors and on the second pair of charging conductors. Advantageously, the charging sector can be additionally expanded in terms of its longitudinal extent, since the charging power can be tapped off not only in the area of the pair of charging conductors of the first contact rail element, but also in the area of the pair of charging conductors of the second contact rail element.

The controllable switching element is further designed such that, in the open switching state, the first charging power can be tapped off on the first pair of charging conductors and the second charging power can be tapped off on the at least one second pair of charging conductors. In the open switching state, the first charging power can thus be tapped off on the first pair of charging conductors independently of the second charging power on the second pair of charging conductors, with the provision and/or transmission of different charging powers, in particular of charging voltages and/or charging current that can be regulated separately, on the pair of charging conductors of the first contact rail element and on the pair of charging conductors of the at least one second contact rail element being possible. In the open switching state of the controllable switching element there is thus - in other words - no conductive connection between the pair of charging conductors of the first contact rail element and the pair of charging conductors of the at least one second contact rail element.

Within the scope of the present invention, the modular contact rail can be expanded by a large number of contact rail elements in order to adapt the overall extent of the modular contact rail to the overall extent of the single-lane parking area. Thus, according to the invention, the modular contact rail can be formed not only by a first contact rail element and a second contact rail element, but can also comprise further contact rail elements, in particular a third contact rail element and/or a fourth contact rail element, in order to make possible, independently of a parked position of the vehicle, the contact of the movable contacting element with one of the pairs of charging conductors, for the purpose of tapping off a charging power. The further contact rail elements, in particular a third contact rail element and/or a fourth contact rail element, are formed in accordance with the at least one second contact rail element.

In a preferred embodiment, the contact rail element, in particular the first and the at least one second contact rail element, comprises a pilot conductor, which is in operative connection with the control means and is formed along the contact rail element in the freely accessible area in such a way that, via the contacting element, a control signal can be transmitted between the control means and a vehicle.

The pilot conductor enables the exchange of control signals between the vehicle and the control means, particularly in order to identify the vehicle and to control the charging process.

The pilot conductor is preferably set up to carry digital control signals or to carry analog control signals. In this context, the use of standardized communication protocols is also particularly preferred.

In a further embodiment, the pilot conductor of the first contact rail element is electrically insulated from the pilot conductor of the at least one second contact rail element. In a further embodiment, the control means have a modular design, with each contact rail element, in particular the first contact rail element and the at least one second contact rail element, comprising a separate control module in order to enable independent charging of the individual contact rail elements, in particular when the at least one switching element is in an open switching state.

The control module of one of the contact rail elements, in particular of the at least one second contact rail element, is preferably designed to control the respective switching element and/or set up to exchange communication data with the corresponding charge controller. The control module preferably includes a stored-program controller (PLC).

In other words, due to the modular design of the contact rail elements, the contact rail according to the invention can be adapted to the entire extension of the parking lane of the vehicle depot during commissioning. By dynamically interconnecting a plurality of contact rail elements, charging sectors can then be formed whose longitudinal extent is adapted to the overall extent of the vehicles parked in the parking lane.

It is further provided that the contact rail element, in particular the first and the at least one second contact rail element, comprises a protective conductor, the protective conductor of the first contact rail element being electrically connected to the protective conductor of the at least one second contact rail element. The protective conductor is also designed in the freely accessible area in such a way that the movable contacting element can be electrically connected in order to tap off the potential of the protective conductor and thus to form a general reference potential.

Advantageously, a uniform reference potential between a vehicle and at least one charge controller can thus be formed via the contacting element.

According to a further embodiment, the contact rail element comprises, in an installed and/or operational state and in a cross-sectional view, a base body which has a substantially inverted V-shaped interior space and/or which comprises a base section with two opposite end sections, the base section being oriented horizontally and both end portions being pivoted in opposite directions with respect to the base portion in such a way that a common interior space is formed.

For example, the shared interior space is oriented in such a way that it is only open on one side. In other words, the common interior space is delimited by the base section and by the two end sections and includes an opening and/or open side that is oriented downwards when installed. The opening is thus in particular opposite the base section with the opening being delimited laterally by a respective one of the end sections.

In other words, in a cross-sectional view and with an operational orientation, the contact rail element comprises a horizontally oriented base section which comprises two opposite end sections that are arranged and/or aligned by being pivoted in opposite directions with respect to the horizontal base section in such a way that the two end sections each form an obtuse angle with the base section.

The obtuse angle is situated preferably between the end section and the base section. As further preferred, a first obtuse angle between the right-hand end section and the base section corresponds to a second obtuse angle between the left-hand end section and the base section, the base body having a symmetrical structure with respect to a central line.

The two obtuse angles preferably are situated on the same side of the base section.

The freely accessible area extends in the interior space and/or is arranged on the inside of the V-shaped base body and/or of the contact rail element. This advantageously means that when the modular contact rail is in the installed state, all electrical contact points are protected from environmental influences and/or falling objects.

Within the scope of the present invention, the inner side is defined as the area that is connected, as seen in a cross-sectional view, and is formed by an outer side of the base section and a respective partial area of the outer sides of the two end sections.

According to a further embodiment of the present invention, it is provided in this context that the base section includes the pilot conductor and/or the protective conductor and that the first charging conductor is arranged in one end section and the second charging conductor is arranged in the other end section.

The first charging conductor and the second charging conductor are preferably made of copper and/or comprise a copper alloy and/or are made of a material with high electrical conductivity. Conductor-bound losses in the supply line can thus advantageously be minimized.

The pair of charging conductors, in particular the pair of charging conductors of the first contact rail element and the pair of charging conductors of the at least one second contact rail element, is designed to carry a DC voltage of up to 1,500 V, preferably 1,200 V, particularly preferably 1,000 V and/or has a cross-sectional area that is suitable for carrying a direct current of up to 1,000 A, preferably 800 A, particularly preferably 600 A.

The choice of material and the insulating strength of the contact rail element, in particular of the base body and/or the pair of charging conductors, are implemented in this context in such a way that a high charging power can be transmitted via the contact rail element according to the invention. The current-carrying capacity of the pair of charging conductors of the contact rail according to the invention, in particular the first and the second charging conductor of the pair of charging conductors, is preferably at least 600 A.

In a further embodiment, the controllable switching element is formed by two independent or separately controllable single-pole switches or by a multi-pole, in particular two-pole, switch.

The controllable switching element, which is designed for selectively disconnecting or connecting two pairs of charging conductors, can thus be constituted by standardized components, in particular NO contactors, which results in low component costs.

A single-pole switch is a remotely operated switch with a control contact, an input contact and an output contact which, in response to a control signal that can be applied to the control contact of the single-pole switch, can electrically connect or disconnect the input contact with the output contact. To form the controllable switching element, two single-pole switches are therefore required in order to electrically connect the pair of charging conductors of the first contact rail element to the pair of charging conductors of the second contact rail element.

A multi-pole, in particular two-pole, switch is an electrical switch which, in response to a single control signal, can electrically connect or disconnect a first electrical input contact with a first electrical output contact and a second electrical input contact with a second electrical output contact.

The control signal is preferably realized by a supply voltage, with the switch being designed in such a way that the closed switching state is realized only when the supply voltage, in particular a DC voltage or an AC voltage, is applied. Alternatively, a current pulse or a voltage pulse can also serve as the control signal.

Furthermore, within the scope of the present invention, protection is also claimed for a charging device for providing charging power for battery-operated and/or battery-assisted vehicles that can be parked on a single-lane parking area of a vehicle depot extending along a longitudinal direction.

The charging device according to the invention comprises at least two charge controllers for providing a first and at least a second charging power. The charging power is obtained from an input-side energy source, for example a medium-voltage network connection and/or a local power plant. Furthermore, the charging device according to the invention comprises a modular contact rail, which is designed according to the present invention.

The contact rail according to the invention is designed in the charging device according to the invention in such a way that the (first) pair of charging conductors of the first contact rail element is electrically connected to the first charge controller or can be connected to it via switching means in order to provide the first charging power on the first pair of charging conductors. Furthermore, the (second) pair of charging conductors of the at least one second contact rail element is electrically conductively connected to the at least one second charge controller or can be connected to it via switching means in order to provide the second charging power on the second pair of charging conductors.

Installation cables are preferably used to establish an electrical connection between the charge controller and the pair of charge conductors. The installation cables are preferably laid in underground cable protection pipes or in above-ground cable routes. More preferably, the end of the installation cable is connected directly or indirectly via switching means to the first charging conductor and to the second charging conductor of the pair of charging conductors.

In any case, the charging device is designed such that a circuit, in particular a charging circuit, can be generated between at least one of the charge controllers and a vehicle battery by electrically contacting the two charging conductors of the pair of charging conductors by means of the contacting element.

The first charge controller and the at least one second charge controller are preferably installed spatially separate from the contact rail and/or from all contact rail elements. Also preferably, the first charge controller and the at least one second charge controller are arranged centrally as a unit. In particular, the unit is installed in a separate room or in a container. Alternatively, a modular, in particular decentralized, configuration of the charge controller is provided, with the first charge controller and the at least one second charge controller being installed at spatially separate positions. Preferably, particularly in connection with a decentralized configuration of the charge controller, the modular charge controllers are arranged in relation to the respective electrically connected contact rail element such that the length of the installation cable that connects the charge controller to the pair of charging conductors is minimized. Charge controller and control module can thus advantageously be combined. If the charge controller is supplied directly with medium voltage, line losses can also be reduced with a decentralized installation of the charge controller.

The charging device according to the invention has the advantage that at least two pairs of charging conductors can be electrically connected to one another via the at least one controllable switching element. The modular contact rail can thus form a common charging sector or at least two charging sectors that are independent of one another. The length of the charging sector can be adjusted to the longitudinal extent of the vehicle via the switching element.

In the case of a charging sector that is formed from more than one contact rail element, the charging power is provided jointly by the first charge controller and by the at least one second charge controller. The common charging power can then be tapped off within the charging sector on one of the pairs of charging conductors by means of a single contacting element, with the maximum charging power provided by the contact rail element being increased, in particular doubled.

In other words, when the controllable switching element of the second contact rail element is in a closed switching state, a (common) charging power can be tapped off on the pair of charging conductors of the first contact rail element or on the second contact rail element by a single contacting element. The common charging power can be provided by the first charge controller and/or the second charge controller.

When the charging power is provided by more than one charge controller, different methods for dividing and/or generating the common charging power between the individual charge controllers are possible. It is possible that the charging power is always provided by several charge controllers. It is also possible that the number of active charge controllers varies depending on the charging power required.

In a further embodiment, the charging device according to the invention is designed such that the first charge controller is operatively connected to the control module of the first contact rail element and that the at least one second charge controller is operatively connected to the control module of the at least one second contact rail element.

Commercially available network cables are preferably used to form the communication connection between the charge controller and the control module. For larger distances between the charge controller and the control module, for example more than 100 m, fiber optic cables can be used.

In a further embodiment, the charge controller, in particular the first and/or the at least one second charge controller, is designed to generate and/or adjust a regulated DC voltage and/or a regulated direct current.

Advantageously, the tapped charging power can thus be used directly to charge the vehicle battery, with either a regulated current being impressed on the vehicle battery, in particular in order to achieve a high charging power, or a regulated charging voltage on the pair of charging conductors, in particular between the first charging conductor and the second charging conductor, being generated in order to also achieve high states of charge of the vehicle battery and/or to implement a charging mode for maintaining the state of charge.

By providing a regulated voltage by the charge controller it also is possible to generate a charging voltage which can be tapped off on the pair of charging conductors using the contacting element, in order to charge the vehicle battery using a predefinable voltage. The charging current and thus the charging power are adjusted depending on the internal resistance of the vehicle battery. Advantageously, the state of charge of a vehicle battery can also be maintained over a longer period of time by a voltage-regulated charging operation, for example in order to reduce chemical aging processes within the vehicle battery.

In a further embodiment, it is preferred that the charge controller, in particular the first charge controller and the at least one second charge controller, is designed as a rectifier in order to convert an unregulated AC voltage on the input side into a regulated charging voltage, in particular a DC voltage, and/or a charging current, in particular a direct current, on the output side.

Alternatively, an embodiment of the charge controller is also provided as a DC voltage converter, in order to convert a DC voltage that is unregulated on the input side into a regulated charging voltage, in particular a charging DC voltage.

In this context, it is also particularly preferred that the rectifier and/or the DC-DC converter is designed for bidirectional operation in order to temporarily allow, for example in the event of a mains voltage failure or at times of high electricity purchase prices, for feed back of the energy stored in the vehicle battery of a first vehicle. The recovered energy can then be used to charge a second vehicle battery of a second vehicle.

The charge controllers can preferably consist of one or more power modules. As a further embodiment, these power modules can be interconnected so that the maximum output power of the charge controller can be adjusted. Advantageously, the available charging power can thus be better adapted to the required charging power, resulting in better utilization and thus lower operating costs.

In addition, the present invention also includes a vehicle depot for battery-operated and/or battery-assisted vehicles with at least one single-lane parking area that extends along a longitudinal direction and has a total extension of a multiple of a length unit LE, and with a charging device that is designed according to the invention already described.

The parking area can be designed in one lane, with several vehicles being parked in a row. Furthermore, the parking area can also have multiple lanes, in which case the vehicles can be parked not only one behind the other, but also next to each other.

The contact rail according to the invention has an overall extent which essentially corresponds to the length of the parking area, in particular of the respective parking lane. Furthermore, the contact rail preferably extends at a uniform distance from the parking area in a plane aligned essentially parallel to the parking area. A modular contact rail is preferably assigned to each parking lane which is formed to accommodate a plurality of vehicles. By means of the large number of controllable switching elements, charging sectors of different lengths can thus be formed in accordance with the parked vehicle.

The contact rail element, in particular the first and the at least one second contact rail element, has a total extent which essentially corresponds to the length unit LE. The contact rail thus has an overall length that corresponds to a multiple of the length unit LE.

Furthermore, in this context, it is provided according to the invention that the first contact rail element is arranged above the respective parking area in relation to a vertical axis and extends along the parking area in such a way that, for tapping off a charging power, a movable contacting element of a vehicle parked within a first section of the parking area, can be connected to the pair of charging conductors of the first contact rail element. Accordingly, the at least one second contact rail element is aligned along the parking area in such a way that the movable contacting element of a second vehicle that is parked within a second section of the parking area can tap off a second charging power.

In the context of the present invention, the parking area is formed as at least one parking lane that extends in the longitudinal direction and has such a long extension that several vehicles, which can have different vehicle lengths, can be parked one behind the other on the parking area. The first section of the parking area is arranged directly adjacent to the at least one second section of the parking area in the longitudinal direction. In other words, the single-lane parking area comprises at least two sections longitudinally dividing the parking area. The length of a section is determined by the length of the vehicle parked in that section. Furthermore, the number of contact rail elements also is determined as a function of the length of a vehicle; the number of contact rail elements preferably results from the quotient of the vehicle lengths and the greatest common divisor of the different vehicle lengths.

If the controllable switching element is not in the closed switching state, the first section of the parking area extends below the first contact rail element and the second section of the parking area below the at least one second contact rail element.

If the controllable switching element is in the closed switching state and thus electrically conductively connects the pair of charging conductors of the first contact rail element to the pair of charging conductors of the second contact rail element, the first section of the parking area extends under the first and the second contact rail element. A charging sector for tapping off a charging power for a vehicle is formed in each section.

In the context of a preferred embodiment of the vehicle depot, the length unit LE is selected such that it is between 3 m and 8 m, preferably 4 m and 7 m, particularly preferably 5.5 m and 6.5 m.

In addition, in the context of the present invention, protection is also claimed for a transportation system which comprises a vehicle depot according to the invention and at least two battery-operated and/or battery-assisted vehicles.

The vehicles have an overall length that corresponds to the length unit LE or a multiple of the length unit LE.

Furthermore, the vehicles have a movable contacting element that enables electrical and/or mechanical contacting to the pair of charging conductors in order to tap off the charging power provided by the charge controller and transmit it to the vehicle battery.

The movable contacting element is preferably arranged on the vehicle roof and in particular set up in such a way that the electrical contact to the pair of charging conductors can be established automatically as soon as the vehicle has arrived on a parking position on the parking area. The contacting element is preferably designed as a pantograph system or as a plug system, which enables a voltage to be tapped off electrically. For contacting the pair of charging conductors, the contacting element in any case comprises two contact areas which are electrically isolated from one another, so that a disadvantageous voltage flashover or an electrical short circuit cannot occur.

The plug system preferably includes a charging cable per vehicle, which can be electrically contacted manually or automatically by means of a handling unit, in particular a robot arm, to the contact rail element in order to electrically contact at least the pair of charging conductors. Due to the freely accessible area, which extends along the contact rail element, there is a large tolerance for a successful contact with the pair of charging conductors in relation to the longitudinal position of the contacting element.

The vehicle is preferably designed as a bus for transporting people, with several vehicles being able to form a vehicle fleet. More preferably, the omnibus or bus or the passenger transportation vehicle has two or three axles. More preferably, the fleet also includes at least one articulated bus, which can include one articulated section or even two articulated sections in order to form a vehicle with a particularly large overall extent.

The transportation system according to the invention thus has the advantage that regardless of the order in which the vehicles parked on the parking area are parked, all vehicles parked on the parking area can tap off a charging power via their contacting element on the contact rail.

The charging infrastructure can be optimally used by dynamically forming the charging sectors. This results in a high utilization of the charging infrastructure provided, whereby the space requirement for parking spaces does not increase.

A charging sector, which can have either just one contact rail element or more than one contact rail element, has a longitudinal extent that can be adapted to the overall extent of the vehicles.

It is advantageous to mention in this context that, in vehicles with a larger overall extent and thus with a greater weight, batteries with larger capacities are installed, which can in principle also be charged with higher charging capacities. This also leads to a particularly efficient use of the charging infrastructure, which helps to keep operating costs low.

Further advantages, features and details of the invention result from the following description of preferred exemplary embodiments and from the figures; these show in
- Fig. 1:: a schematic top view of a modular contact rail according to the invention according to a first preferred embodiment with three contact rail elements,
- Fig. 2:: a schematic representation of a charging device according to the invention with the already known contact rail,
- Fig. 3:: a schematic cross-sectional view of the contact rail according to a second preferred embodiment,
- Fig. 4:: a schematic representation of a transportation system according to the invention according to a preferred embodiment and
- Fig. 5:: a highly schematized representation of a transportation system according to the invention according to a further possible embodiment in a plan view.

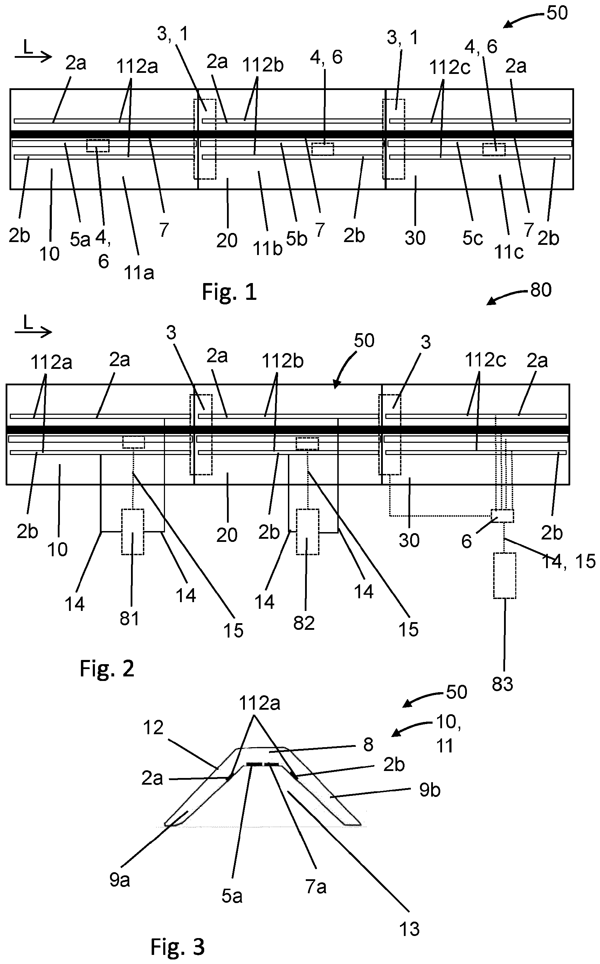

Fig. 1 shows a schematic representation of a modular contact rail 50 according to a first preferred embodiment of the present invention in a plan view.

The modular contact rail 50 comprises a first contact rail element 10 and at least one second contact rail element, which is formed by a second contact rail element 20 and a third contact rail element 30 in the present embodiment.

The three contact rail elements 10 through 30 each have a base body 11a through 11c with an elongated contour, are aligned one behind the other in a row along a common longitudinal axis L, and each comprise a pair of charging conductors 112a, 112b, 112c, a pilot conductor 5a, 5b, 5c and a protective conductor 7.

The pair of charging conductors 112a, 112b, 112c are each formed by a first charging conductor 2a and a second charging conductor 2b which are electrically insulated from one another. The pair of charging conductors 112a, 112b, 112c extend along the longitudinal axis L over the entire length of the respective contact rail element 10, 20, 30 in a freely accessible area of the base body 11a, 11b, 11c such that, by means of a movable contacting element 65, which a vehicle comprises, an electrical contact can be made to tap off a charging power. The contacting element 65 can thus close a charging circuit via the first charging conductor 2a and the second charging conductor 2b.

Furthermore, the pilot conductor 5a, 5b, 5c and the protective conductor 7 extend in the freely accessible area in such a way that an electrical contact can be made via the contacting element 65.

The protective conductor 7 of the first contact rail element 10 is electrically conductively connected at the end to the protective conductor 7 of the second contact rail element 20. Furthermore, the protective conductor 7 of the second contact rail element 20 is electrically conductively coupled to the protective conductor 7 of the third contact rail element 30 at the opposite end. The modular contact rail 50 can thus advantageously form a common reference potential that runs through all contact rail elements 10, 20, 30 and can be tapped off by a contacting element 65.

In contrast, the pilot conductor 5a, 5b, 5c is electrically insulated at the end. Therefore, in the present embodiment, there is no electrically conductive connection between the pilot conductor 5b of the second contact rail element 20 and the pilot conductor 5a of the first contact rail element 10 or the pilot conductor 5c of the third contact rail element 30.

The second contact rail element 20 and the third contact rail element 30 also include a controllable switching element 3. The controllable switching element 3 can be switched between a closed and an open switching state, with the pair of charging conductors 112a, 112b, 112c of two adjacent contact rail elements 10, 20, 30 being electrically conductively connected to one another in the closed switching state. The freely accessible area can thus advantageously be extended in terms of its longitudinal extension.

Preferably, the controllable switching element 3 is configured as a two-pole contact making device or switch 1, it being possible for two pairs of contacts to be connected to one another or separated depending on a single control signal. Specifically for the controllable switching element 3 of the second contact rail element 20, this means that the pair of charging conductors 112a of the first contact rail element 10 is electrically conductively connected to the pair of charging conductors 112b of the second contact rail element 20 in the closed switching state. In contrast, when the switching element 3 of the second contact rail element 20 is in the open switching state, the pair of charging conductors 112a of the first contact rail element 10 is electrically isolated from the pair of charging conductors 112b of the second contact rail element 20.

In the context of the present invention, when connecting the pair of charging conductors 112a of the first contact rail element 10 to the pair of charging conductors 112b of the second contact rail element 20, it is understood that the first charging conductor 2a of the first contact rail element 10 is connected to the first charging conductor 2a of the second contact rail element 20 and the second charging conductor 2b of the first contact rail element 10 is electrically conductively connected to the second charging conductor 2b of the second contact rail element 20.

Furthermore, the modular contact rail 50 includes control means 4 which are designed to control the controllable switching element 3. In the present embodiment, the control means 4 are configured in a modular manner by a multiplicity of control modules 6, with the three contact rail elements 10, 20, 30 each comprising a control module 6. The control modules 6 of the individual contact rail elements 10, 20, 30 are each connected to the pilot conductor 5a, 5b, 5c of the corresponding contact rail element 10, 20, 30 and are set up to implement a communication link for data exchange via the contacting element 65 via the pilot conductor 5a, 5b, 5c.

By using the contacting element 65, not only the pair of charging conductors 112a, 112b, 112c can be contacted via the free area for tapping off a charging power, but also the pilot conductor 5a, 5b, 5c for forming the communication link between the control module 6 and the vehicle.

**Fig. 2** shows a charging device 80 according to the invention in a schematic representation. The charging device 80 according to the invention comprises a contact rail 50 according to the invention according to the already known first preferred embodiment, as well as at least two charge controllers 81, 82, 83, which in the present case are formed by a first charge controller 81, a second charge controller 82 and a third charge controller 83.

The first charge controller 81 is electrically conductively connected to the pair of charging conductors 112a of the first contact rail element 10, the second charge controller 82 is electrically conductively connected to the pair of charging conductors 112b of the second contact rail element 20 and the third charge controller 83 is connected to the pair of charging conductors 112c of the third contact rail element 30.

Further, an alternative integration or connection is shown as an example for the third charge controller 83. The power and control lines lead from the charge controller 83 first to the control module 6 and from there to the switching element 3, the pair of charging conductors 112c, the protective conductor 7 and the pilot conductor 5c.

The connection between the charging controller and the pair of charging conductors is preferably made via the control module. This simplifies the wiring, and standardized control modules can be used.

Respective installation cables 14 are provided for the electrical connection of the charge controllers 81, 82, 83.

When the controllable switching element 3 of the second contact rail element 20 is in the closed switching state, the pair of charging conductors 112a of the first contact rail element 10 is electrically connected to the pair of charging conductors 112b of the second contact rail element 20. In addition to the expansion of the freely accessible area provided for the electrical contacting by the charging conductors 112a, 112b of the first and second contact rail elements 10, 20, this also leads to a doubling of the charging power that can be tapped off using the contacting element 65, since this power can be provided by the first charge controller and by the second charge controller.

**FIG. 3** shows a cross-sectional view of one of the contact rail elements 10, 20, 30 of the modular contact rail 50 according to a further preferred embodiment. When the contact rail element 10 is installed and/or oriented as ready for operation, it comprises an essentially inverted V-shaped interior space 13 which is formed by a base body 11 of the contact rail element 10. The base body 11 and/or the contact rail element 10 comprises a base section 8 which is oriented horizontally in the operative orientation. Furthermore, the base section 8 comprises at its opposite ends a first end section 9a and a second end section 9b, which are pivoted in opposite directions with respect to the base section 8 such that an interior space 13 is delimited between the base section 8 and the two end sections 9a, 9b.

The protective conductor 7 and the pilot conductor 5a are situated in the area of the base section 8. The first charging conductor 2a is situated in the first end section 9a and the second charging conductor 2b is situated in the second end section 9b.

In the illustrated operational state of the modular contact rail 50, the freely accessible area is oriented downwards and is situated within the interior space 13. This advantageously protects the open contact points of the pair of charging conductors 112a and the pilot conductor 5a and the protective conductor 7 from negative environmental influences at the installation site.

The contact rail 50 is preferably fixed to an existing infrastructure at the installation site. Furthermore, it is preferred that the contact rail 50 extends along a parking lane and is fixed to the infrastructure at such a height that vehicles can be parked underneath in the parking lane.

Electrical contact is then made with the pair of charging conductors 112a, 112b, 112c, the pilot conductor 5a and the protective conductor 7 via a movable contacting element 65, which is preferably located on the vehicle roof.

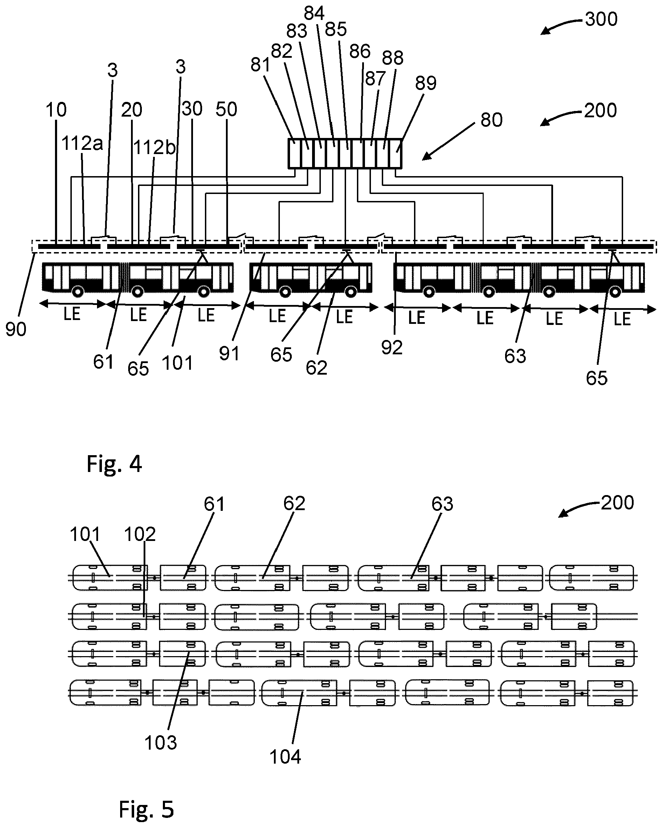

**Fig. 4** shows a preferred embodiment of a transportation system 300 according to the invention in a schematic side view, which, in addition to a vehicle depot 200, also includes a fleet of several vehicles 61, 62, 63 with different vehicle lengths.

Vehicles 61, 62, 63 are designed as buses for passenger transportation. The length of the vehicle varies due to a different number of joint modules, with the total length of the vehicles 61, 62, 63 corresponding to a multiple of a length unit LE. The length unit LE also corresponds to the longitudinal extent of the contact rail element 10, 20, 30, with the length unit LE being essentially 6 m in the exemplary embodiment shown.

Each vehicle 61, 62, 63 comprises a movable contacting element 65 arranged on the vehicle roof in order to tap off a charging power when in contact with the contact rail 50.

The vehicle depot 200 consists of a single-lane parking area 101, on which several vehicles 61, 62, 63 can be parked one behind the other, and a charging device 80 according to the invention, according to a further preferred embodiment.

As already explained with reference to **FIG. 2**, the charging device 80 according to the invention comprises a modular contact rail 50, comprising a first contact rail element 10 and at least one second contact rail element 20 and at least two charge controllers 81 through 89. Each charge controller 81through 89 can provide a maximum charging power Pₘₐₓ of 50kW and is set up to generate a regulated charging voltage or a regulated charging current.

As soon as the vehicles 61, 62, 63 are parked on the parking area 101, each vehicle 61, 62, 63, regardless of the order in which the vehicles 61, 62, 63 are parked, can make an electrical contact via the contacting element 65 with the pair of charging conductors 112a, 112b, 112c located vertically directly above to tap off the charging power.

The contact rail elements 10, 20, 30 are connected via the controllable switching elements 3 in such a way that the length of the vehicles 61, 62, 63 is represented by the length of the electrically conductively connected contact rail elements 10, 20, 30.

The maximum charging power Pₘₐₓ available via the contacting element 65 increases with the number of contact rail elements 10, 20, 30 electrically conductively coupled to one another via the controllable switching element 3, since each contact rail element 10, 20, 30 is connected to one of the charge controllers 81through 89.

In the exemplary embodiment shown, the maximum charging power that can be tapped off varies for the three vehicles 61, 62, 63 shown. For the first vehicle 61, the charging power is provided by three charge controllers 61, 62, 63, for the middle vehicle 62 the charging power is generated by two charge controllers 64, 65, with the first vehicle 61 being able to be provided with a greater charging power, since three contact rail elements 10, 20, 30 are electrically connected, than the middle vehicle 62, since the charging section of the middle vehicle 62 is composed of only two connected contact rail elements.

In the vehicles 61, 62, 63 of the transportation system 300 according to the invention, the size, in particular the total capacity, of the battery also increases with the length of the vehicle. Since the maximum charging power required increases with the overall capacity of the vehicle battery, the optimum charging power is available for every vehicle. A blockage of the charging infrastructure by vehicles that can only be charged with low power can thus be advantageously prevented.

Overall, in that way, independent charging sectors, in particular a first charging sector 90, a second charging sector 91 and a third charging sector 92, are formed.

**Fig. 5** shows a highly schematic top view of a vehicle depot 200 with a large number of single-lane parking spaces 101 through 104, with several vehicles 61, 62, 63 being parked in a row in each of the four parking lanes 101 through 104 shown. The vehicles 61, 62, 63 have three different total lengths, with the order of the vehicles being established arbitrarily, in particular depending on a timetable.

By means of the modular contact rail 50 according to the invention, an independent charging sector 90, 91, 92 can be formed for each vehicle 61, 62, 63 parked in the parking area 101 through 104, with the electrical contacting of the pair of charging conductors 121a, 121b, 121c within the charging sector 90, 91, 92 being possible at any longitudinal position by means of the contacting element 65 of the vehicle 61, 62, 63.

Before starting a charging process, the controllable switching elements 3 are switched between the closed and the open switching state in such a way that the longitudinal extent of the charging sectors essentially corresponds to the longitudinal extent of the vehicles 61, 62, 63 parked underneath. It is therefore provided within the scope of the present invention that the contact rail elements 10, 20, 30 have a total extent along the longitudinal axis L which corresponds to the length unit LE of essentially 6 m. Furthermore, the vehicles are designed in such a way that they have a longitudinal extent of a multiple of the length unit.

This advantageously means that the charging infrastructure can be coordinated particularly efficiently with respect to the charging capacity of the vehicles 61, 62, 63 of the transportation system 300. Furthermore, the present invention allows the changeover from combustion engine-based vehicle fleets to battery-operated vehicle fleets without additional space being required for carrying out the charging processes during regular standstills.

### Reference List

- 1: two-pole switching element
- 2a: first charging conductor
- 2b: second charging conductor
- 3: controllable switching element
- 4: control means
- 5a, 5b, 5c: pilot conductor
- 6: control module
- 7: protective conductor
- 8: base section
- 9a, 9b: end section

- 10: first contact rail element
- 11: base body
- 12: outer contour
- 13: interior space
- 14: installation cables
- 15: network and network cables
- 112a: first pair of charging conductors
- 112b: second pair of charging conductors
- 112c: third pair of charging conductors

- 20: second contact rail element
- 30: third contact rail element

- 50: modular contact rail
- 61, 62, 63: vehicle
- 65: contacting element

- 80: charging device

- 81 through 89: charge controller
- 90: first charging sector
- 91: second charging sector
- 93: third charging sector

- 101 through 104: single lane parking lot
- 200: vehicle depot
- 300: transportation system

## Claims

1. Modular contact rail (50) for a movable contacting element (65) of a battery-operated and/or battery-assisted vehicle (61, 62, 63), with several vehicles (61, 62, 63) being intended to be parked on a single-lane parking area (101 through 104) extending along a longitudinal axis (L), comprising
a first contact rail element (10) with an elongate base body (11) which can be aligned along the longitudinal axis (L) in an installed state and with a pair of charging conductors (112a) which are designed to be freely accessible along the longitudinal extent of the contact rail element (10) in such a way that a movable contacting element (65) of a vehicle (61, 62, 63) that is parked within a first section of the parking area (101 through 104) can be contacted to tap off a first charging power, at least one second contact rail element (20) which is formed corresponding to the first contact rail element (10) and can be arranged in the installed state along the longitudinal axis (L) immediately adjacent to the first contact rail element (20) and additionally comprises a controllable switching element (3), the at least one second pair of charging conductors (112b) of the at least one second contact rail element (20) being designed to be contacted by a movable contacting element (65) of a vehicle (61, 62, 63), which can be parked within a second section of the parking area (101 through 104), at a number of positions for tapping off a second charging power, with the first pair of charging conductors (112a) being able, in a closed switching state of the switching element (3), to be electrically conductively connected, via the switching element (3), to the second pair of charging conductors (112b) in order to tap off the first and second charging power via a contacting element on the first or second pair of charging conductors (112a/b), and control means (4) for actuating the switching element (3).

2. Contact rail according to claim 1,
**characterized in that**
the contact rail element (10, 20, 30), in particular the first and the at least one second contact rail element, comprises a pilot conductor (5a, 5b, 5c) which is in operative connection with the control means (4) and which is formed along the contact rail element (10, 20, 30 ) in the freely accessible area (1) such that a control signal can be exchanged between the control means (4) and a vehicle (61, 62, 63) via the contacting element (65), in particular via a pilot conductor section of the contacting element.

3. Contact rail according to claim 2,
**characterized in that**
the pilot conductor (5a) of the first contact rail element (10) is electrically insulated from the pilot conductor (5b) of the at least one second contact rail element (20).

4. Contact rail according to one of the preceding claims,
**characterized in that**
the contact rail element (10, 20, 30), in particular the first and the at least one second contact rail element, comprises a protective conductor (7) which is formed in the freely accessible area (1) in such a way that the contacting element (65) can be electrically connected and/or wherein the protective conductor (7) of the first contact rail element (10) is electrically connected to the protective conductor (7) of the at least one second contact rail element (20).

5. Contact rail according to one of the preceding claims,
**characterized in that**
the contact rail element (10, 20, 30), in a cross-sectional view and in an installed and/or operational state, comprises a base body (11) which has an essentially inverted V-shaped interior space (13) and/or which has a base section (8) that comprises two opposite end sections (9a, 9b), the base section (8) being aligned horizontally and the two end sections (9a, 9b) being pivoted in opposite directions with respect to the base section (8) in such a way that a common interior space (13) is delimited.

6. Contact rail according to claim 5,
**characterized in that**
the base section (8) includes the pilot conductor (5a, 5b, 5c) and/or the protective conductor (7) and **in that** in each end section (9a, 9b) a charging conductor (2a, 2b) of the pair of charging conductors (112a, 112b, 112c) is formed.

7. Contact rail according to one of the preceding claims,
**characterized in that**
the pair of charging conductors (112a, 112b, 112c), in particular the first pair of charging conductors and the at least one second pair of charging conductors, is designed to carry a direct voltage of up to 1,500 V, preferably 1,200 V, particularly preferably 1,000 V and/or that the pair of charging conductors (112a, 112b, 112c) has a cross-sectional area which is designed to carry a direct current of up to 1,000 A, preferably 800 A, particularly preferably 600 A.

8. Contact rail according to one of the preceding claims,
**characterized in that**
the controllable switching element (3) is formed by two single-pole switches or by a multi-pole, in particular two-pole, switch (1), which are open in the normal state.

9. Charging device (80) for providing a charging power for battery-operated and/or battery-assisted vehicles (61, 62, 63) which are parked on a single-lane parking area (101 through 104) of a vehicle depot (200) extending along a longitudinal direction (L), comprising
at least two charge controllers (81, 82) for providing charging power from an energy source,
a modular contact rail (50) designed according to one of the preceding claims, the pair of charging conductors (112a ) of the first contact rail element (10) being designed to be electrically connected to the first charge controller (81), and the pair of charging conductors (112b) of the at least one second contact rail element (20) being designed to be electrically connected to the at least one second charge controller (82).

10. Charging device according to claim 9,
**characterized in that**
the charge controller (81, 82) is designed to generate a regulated DC voltage and/or a regulated direct current.

11. Charging device according to claim 9 or 10,
**characterized in that**
the charge controller (81, 82), in particular the first and the at least one second charge controller, is formed as a rectifier for generating a charging voltage and/or a charging current on the output side from an AC voltage on the input side and/or as a DC voltage converter for converting the amount of a DC voltage on the input side into an output-side charging voltage or into an output-side charging current.

12. Vehicle depot (200) for battery-operated and/or battery-assisted vehicles (61, 62, 63), having at least one single-lane parking area (101 through 104) extending along a longitudinal direction (L), which has a total extension of a multiple of a length unit (LE), and a charging device (80) which is designed according to one of claims 10 to 12,
the contact rail element (10, 20, 30), in particular the first and the at least one second contact rail element, having a total extension which essentially corresponds to the length unit (LE),
the first contact rail element (10) being arranged above the respective parking area (101 through 104) in such a way that a movable contacting element (65) of a vehicle (61, 62, 63) that is parked in the first section of the parking area (101 through 104) can be connected to tap off the charging power, and the at least one second contact rail element (20) being arranged above the parking area (101 through 108) in such a way that the movable contacting element (65) of a second vehicle (61, 62, 63) that is parked in the second section of the parking area (101 through 104) can be connected to tap off the charging power.

13. Vehicle depot according to claim 12,
**characterized in that**
the length unit (LE) is between 3 m and 8 m, preferably between 4 m and 7 m, particularly preferably between 5.5 m and 6.5 m.

14. Transportation system (300) comprising a vehicle depot (200) according to Claim 13 or 14 and at least two battery-operated and/or battery-assisted vehicles (61, 62, 63), the vehicles (61, 62, 63) having an overall length which essentially corresponds to the length unit (LE) or a multiple of the length unit (LE).
